# EUROPÄISCHE PATENTANMELDUNG

(11) **EP 3 483 541 A1**
(43) Veröffentlichungstag der Anmeldung: **15.05.2019**
(21) Anmeldenummer: 18205328.0
(22) Anmeldetag: 09.11.2018
(51) Int. Cl.: F27B 3/22, F27D 3/16, F27D 9/00, C21B 7/10, C21C 5/52

(54) **AUFNAHMEVORRICHTUNG FÜR BEHANDLUNGSVORRICHTUNGEN FÜR METALLURGISCHE GEFÄSSE**

(30) Priorität: 09.11.2017 DE 102017126317
(71) Anmelder: SMS Group GmbH, 40237 Düsseldorf (DE)
(72) Erfinder: Ertl, Markus, 40822 Mettmann (DE); Niekamp, Mark, 42699 Solingen (DE)
(74) Vertreter: Klüppel, Walter

(57) **Zusammenfassung**

Aufnahmevorrichtung zum Schutz von Behandlungsvorrichtungen bei der metallurgischen Behandlung einer Schmelze in einem metallurgischen Gefäß, bestehend aus einer Frontplatte (12) und Seitenwänden (13), wobei die Frontplatte (12) und auch die Seitenwände (13) aus kupferplattiertem Stahl bestehen.

## Beschreibung

Die vorliegende Erfindung betrifft eine Aufnahmevorrichtung zum Schutz von Behandlungsvorrichtungen bei der metallurgischen Behandlung einer Schmelze in einem metallurgischen Gefäß. Unter dem Begriff Behandlungsvorrichtungen werden beispielsweise Injektoren, thermische Lanzen oder Messsonden und dgl. verstanden, sind aber keineswegs hierauf beschränkt.

Aufnahmevorrichtungen für Injektoren in einem Schmelzofen sind beispielsweise aus der EP 1 553 192 A2 bekannt. Sie bestehen aus massivem Kupfer und/oder Stahlblechen und sind im Einsatz einer hohen Hitzebelastung ausgesetzt. Sie unterliegen dadurch einem relativ hohen Verschleiß und verursachen hohe, kostenaufwendige Reparaturen.

Aufgabe der vorliegenden Erfindung ist es, eine kostengünstige Aufnahmevorrichtung zum Schutz der Injektoren für die metallurgische Behandlung von Schmelzen zu schaffen.

Diese Aufgabe wird durch die im Anspruch 1 angegebenen Merkmale gelöst, insbesondere dadurch, dass die Frontplatte und auch die Seitenwände aus kupferplattiertem Stahl bestehen.

Derartige kupferplattierte Stahlbleche für die Außenhaut werden lediglich im Heißbereich eingesetzt. Die Fertigung wird dadurch vereinfacht und die Herstellungskosten werden verringert. Eine aufwendige und teure Konstruktion und Reparaturen nur durch Fachleute werden vermieden, da die bisher erforderlichen reinen Kupferschweißungen und Kupfer/Stahlschweißungen nicht erforderlich sind. Dadurch wird eine einfache Reparatur vor auch Ort möglich.

Gemäß einer Ausführungsform der erfindungsgemäßen Vorrichtung kann das Rückenblech der Aufnahmevorrichtung mit seitlichen Überständen zur Anlage an eine Öffnung eines metallurgischen Gefäßes und mit Haltelaschen versehen sein.

Die Aufnahmevorrichtung wird in der Regel von außen nach innen in die Wandung eines Gefäßoberteils eingebaut. Die seitlichen Überstände bzw. der seitliche Überstand dient damit einerseits zur Abdichtung gegen den Gefäßinnenraum, andererseits dient er zur Befestigung der Aufnahmevorrichtung, beispielsweise mit Hilfe von Bolzen-Keil-Verbindungen.

Als weitere Ausgestaltung der Erfindung können die Frontplatte und die Seitenwände von einem Kühlmittel durchströmt werden.

Des Weiteren kann die Frontplatte mittels Schraub-, Keil-, oder Schweißverbindung mit den Seitenwänden der Aufnahmevorrichtung verbinden werden.

Aus einer Frontplatte und Seitenwänden bestehende Vorrichtung zum Ansetzen an ein Schmelzgefäß, insbesondere für Stahlschmelzen, mit Durchlässen zur Einführung von Lanzen, Injektoren und Sonden für die Zufuhr von Mitteln zur metallurgischen Behandlung der in dem metallurgischen Gefäß befindlichen Schmelze, wobei der Vorrichtung eine mit Kupfer plattierte Außenhaut im Heißbereich zugeordnet sein kann.

Weitere vorteilhafte Maßnahmen sind in den Unteransprüchen beschrieben. Die Erfindung ist in den beiliegenden Zeichnungen dargestellt und wird nachfolgend näher beschrieben. Es zeigen:
- Fig. 1: Eine isometrische Darstellung der erfindungsgemäßen Aufnahmevorrichtung in einer ersten Ausführungsform mit einem Vor- und Rücklauf für ein Kühlmittel;
- Fig. 2: die isometrische Darstellung der erfindungsgemäßen Aufnahmevorrichtung mit abgenommener Frontplatte, wobei hier der Vor- und Rücklauf für das Kühlmittel gegenüber der Fig. 1 gekröpft ausgebildet ist;
- Fig. 3: eine Darstellung im Schnitt durch die erfindungsgemäße Aufnahmevorrichtung in einer Ausführungsform mit einer darin angeordneten Injektor-Aufnahme;

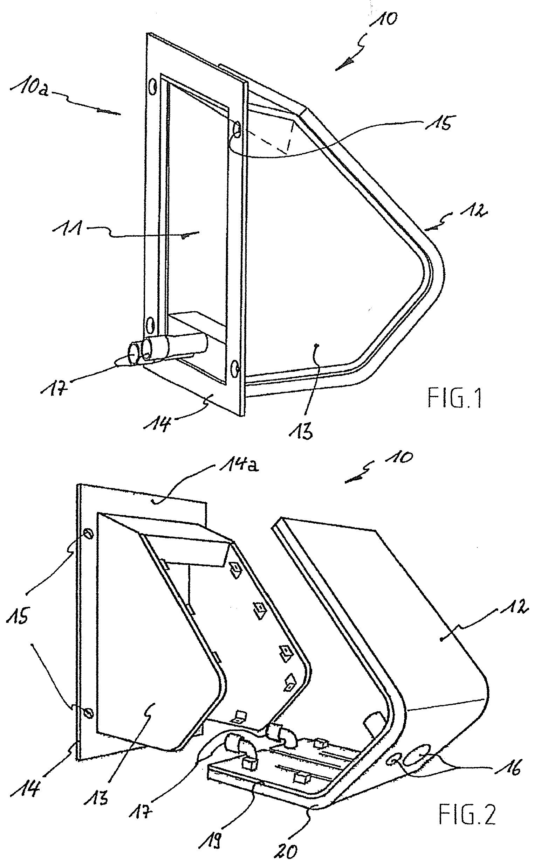

Die Figur 1 zeigt die isometrische Darstellung einer erfindungsgemäßen Aufnahmevorrichtung 10 zum Schutz von Behandlungsvorrichtungen bei der metallurgischen Behandlung einer Schmelze in einem metallurgischen Gefäß. Wie eingangs schon erwähnt, können die Behandlungsvorrichtungen beispielsweise Injektoren, Lanzen oder Messsonden und dergleichen sein.

Die Aufnahmevorrichtung 10 ist als kastenartige Box 10a ausgebildet und weist in Einbaulage hinten einen Zugang 11 auf. Der Zugang 11 ermöglicht es, das Innere der Aufnahmevorrichtung 10 ungehindert zu erreichen. Die Aufnahmevorrichtung 10 kann auch als Hybridbox bezeichnet werden. Hierdurch soll verdeutlicht werden, dass die Frontplatte 12 aus kupferplattiertem Stahlblech und die Seitenwände 13 entweder aus Stahlblech oder ebenfalls aus einem Materialmix aus Stahlblech mit kupferplattiertem Stahlblech bestehen kann.

Die Seitenwände 13 sind fest mit einem Rückblech 14 verbunden. Das Rückblech 14 weist einen rundumlaufenden seitlichen Überstand 14a auf, der zur besseren Abdichtung gegenüber einer Öffnung eines - nicht dargestellten - metallurgischen Gefäßes, beispielsweise eines Schmelzgefäßes, mit der Außenoberfläche des metallurgischen Gefäßes temporär verbunden werden kann. Dies kann dadurch geschehen, dass das Rückblech 14 beispielsweise durch Schraubbolzen mittels dem seitlichen Überstand 14a zugeordneten Bohrungen 15 gegenüber dem metallurgischen Gefäß festgelegt wird.

Wie in der Fig. 2 dargestellt, ist die Frontplatte 12 mit einer Vielzahl von Durchlässen 16 versehen, durch die Behandlungsvorrichtungen (nicht dargestellt), beispielsweise Injektoren oder Lanzen, für eine metallurgische Behandlung einer Schmelze in das metallurgische Gefäß, beispielsweise einem Elektrolichtbogenofen, eingeführt werden können. Die Injektoren sind dadurch gegen die Hitzestrahlung verhältnismäßig geschützt und geringerem Verschleiß ausgesetzt.

Zur Kühlung der Aufnahmevorrichtung 10 ist in der Box 10a (Hybridbox) ein Kühlmittelkreislauf (nicht dargestellt) angeordnet. Der Kühlmittelkreislauf weist einen Zu- und Rücklauf 17 auf und wird hierüber mit einem Kühlmittel versorgt. Wie in Fig. 1 und Fig. 2 dargestellt, können die Zu- und Rückläufe 17 des Kühlmittelkreislaufs unterschiedlich ausgebildet sein.

Wie die Fig. 2 des Weiteren zeigt, kann die Frontplatte 12 von den Seitenwänden 13 abgenommen werden. In dieser Ausführungsform sind den Seitenwänden 13 an deren Innenseiten Haltelaschen 18 (Winkelstücke) zugeordnet. Die Frontplatte 12 kann hierdurch abdichtend mit den Seitenwänden 13 lösbar verbunden werden.

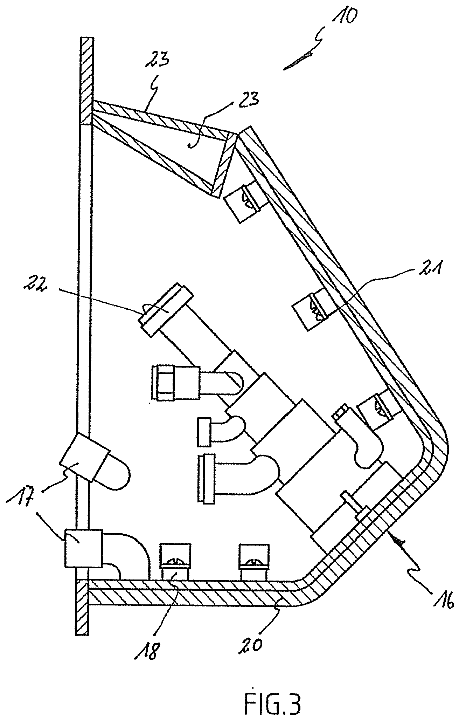

Dabei ist vorgesehen, dass das auf dem Stahlblech 19 aufplattierte Kupferblech 20 der Frontplatte 12 im zusammengebauten Zustand, sprich in der Einsatzposition, erhaben gegenüber den Seitenwänden 13 angeordnet ist, wobei hingegen das Stahlblech 19 bündig mit den Seitenwänden 13 abschließt, wie dies insbesondere in Fig. 3 dargestellt ist.

Die Fig. 3 zeigt eine mögliche Ausführungsform der erfindungsgemäßen Aufnahmevorrichtung 10, bei der die Frontplatte 12 mittels Schraubenbolzen 21 und Haltelaschen 18 (Winkelstücke) gegenüber den Seitenwänden 13 (perspektivbedingt nur eine dargestellt) festgelegt werden kann. In der Frontplatte 12 ist eine Haltevorrichtung 22, beispielsweise für einen Injektor und für weitere Zusatzgeräte, auf einen der Durchlässe 16 angeordnet, mit dem sodann der Injektor über die Haltevorrichtung 22 durch einen Durchlass 16 in das metallurgische Gefäß (nicht dargestellt) eingeführt werden kann.

Wie schon in den Figuren 1 und 2 dargestellt, sind auch in dieser Ausführungsform der Aufnahmevorrichtung 10 mindestens ein Zu- und Rücklauf 17 für einen Kühlmittelkreislauf vorgesehen. Der Kühlmittelkreislauf kann beispielsweise einen Teil einer als doppelwandig ausgebildeten Deckplatte 23 umfassen, die die Seitenwände 13 miteinander verbindet. Durch den hierdurch geschaffenen Hohlraum 24 kann ein Kühlmittel zirkulieren, über das die in die Aufnahmevorrichtung 10 eingetragene Wärme aufgenommen und letztendlich abgeführt werden kann.

### Bezugszeichen

- 10: Aufnahmevorrichtung (Hybridbox)
- 10a: Box
- 11: Zugang
- 12: Frontplatte
- 13: Seitenwand/Seitenwände
- 14: Rückblech
- 14a: seitlich umlaufender Überstand
- 15: Bohrung
- 16: Durchlass / Durchlässe
- 17: Zu- und Rücklauf
- 18: Winkelstück / Winkelstücke
- 19: Stahlblech
- 20: Kupferblech
- 21: Schraubenbolzen
- 23: Deckplatte
- 24: Hohlraum

## Patentansprüche

1. Aufnahmevorrichtung zum Schutz von Behandlungsvorrichtungen bei der metallurgischen Behandlung einer Schmelze in einem metallurgischen Gefäß, bestehend aus einer Frontplatte (12) und Seitenwänden (13) **dadurch gekennzeichnet, dass** die Frontplatte (12) und auch die Seitenwände (13) aus kupferplattiertem Stahl bestehen.

2. Vorrichtung nach Anspruch 1, **dadurch gekennzeichnet, dass** ein Rückenblech (14) mit einem seitlichen umlaufenden Überstand (14a) zur Anlage an eine Öffnung eines metallurgischen Gefäßes versehen ist.

3. Vorrichtung nach den Ansprüchen 1 und 2, **dadurch gekennzeichnet, dass** die Seitenwände (13) mit Haltelaschen (18) versehen sind.

4. Vorrichtung nach den Ansprüchen 1 bis 3, **dadurch gekennzeichnet, dass** die Frontplatte (12) und die Seitenwände (13) von einem Kühlmittel durchströmbar sind.

5. Vorrichtung nach den Ansprüchen 1 bis 4, **dadurch gekennzeichnet, dass** die Frontplatte (12) mittels Schraub-, Keil-, oder Schweißverbindung mit den Seitenwänden (13) der Aufnahmevorrichtung (10) verbindbar ist.

6. Aus einer Frontplatte (12) und Seitenwänden (13) bestehende Vorrichtung zum Ansetzen an ein Schmelzgefäß, insbesondere für Stahlschmelzen, mit Durchlässen (16) zur Einführung von Lanzen, Injektoren und Sonden für die Zufuhr von Mitteln zur metallurgischen Behandlung der in dem metallurgischen Gefäß befindlichen Schmelze, **gekennzeichnet durch** eine mit Kupfer plattierte Außenhaut (12, 13) im Heißbereich.
